# EUROPÄISCHE PATENTANMELDUNG

(11) **EP 4 566 745 A1**
(43) Veröffentlichungstag der Anmeldung: **11.06.2025**
(21) Anmeldenummer: 23215253.8
(22) Anmeldetag: 08.12.2023
(51) Int. Cl.: B23F 5/16, B23F 21/10

(54) **WÄLZSCHÄLWERKZEUG UND WÄLZSCHÄLVERFAHREN MIT GLEICHZEITIGEM EINGRIFFSBEGINN ODER EINGRIFFSENDE ZWEIER SCHNEIDKANTEN**

(71) Anmelder: Reishauer AG, 8304 Wallisellen (CH)
(72) Erfinder: MARX, Hartmut, 8304 Wallisellen (CH); HUBER, Philipp, 8304 Wallisellen (CH)
(74) Vertreter: Kohler Schmid Möbus Patentanwälte

(57) **Zusammenfassung**

Die Erfindung betrifft die Wälzschälbearbeitung von Verzahnungen. Bei der Bearbeitung der Zahnflanken der Verzahnung kommen Schneidkantenpaare von entgegengesetzt orientierten Schneidkanten eines Wälzschälwerkzeugs jeweils zugleich mit zwei entgegengesetzt orientierten Zahnflanken der Verzahnung in Kontakt und/oder außer Kontakt. Abdrängeffekte und daraus resultierende Bearbeitungsungenauigkeiten können dadurch verringert werden. Die beiden Schneidkanten eines solchen Schneidkantenpaares sind durch unterschiedliche erzeugende Geometrien definiert. Insbesondere verlaufen die beiden Schneidkanten eines Schneidkantenpaares am Wälzschälwerkzeug nicht in derselben Ebene und nicht auf derselben Kugelfläche.

## Beschreibung

### Hintergrund der Erfindung

Die Erfindung betrifft ein Wälzschälwerkzeug zum Bearbeiten von Zahnflanken einer Verzahnung eines Werkstücks, indem das Wälzschälwerkzeug um eine Werkzeugachse gedreht wird und das Werkstück um eine windschief zu der Werkzeugachse verlaufende Werkstückachse gedreht wird, wobei das Wälzschälwerkzeug und das Werkstück mit einer Vorschubbewegung mit einer Komponente entlang der Werkstückachse relativ zueinander verschoben werden, wobei das Werkzeug mehrere Schneidzähne mit je einer linken und einer rechten Schneidkante aufweist, welche Schneidkanten beim Bearbeiten des Werkstücks Material von den einander zugewandten Zahnflanken einer Zahnlücke der Verzahnung abtragen. Die Erfindung betrifft ferner ein Verfahren zum Bearbeiten von Zahnflanken einer Verzahnung eines Werkstücks durch Wälzschälen, indem ein Wälzschälwerkzeug in Eingriff mit der Verzahnung gebracht wird, wobei das Wälzschälwerkzeug um eine Werkzeugachse gedreht wird und das Werkstück um eine windschief zu der Werkzeugachse verlaufende Werkstückachse gedreht wird, und wobei das Wälzschälwerkzeug und das Werkstück mit einer Vorschubbewegung mit einer Komponente entlang der Werkstückachse relativ zueinander verschoben werden, wobei das Werkzeug mehrere Schneidzähne mit je einer linken und einer rechten Schneidkante aufweist. Schließlich betrifft die Erfindung ein Verfahren zum Herstellen eines Wälzschälwerkzeugs.

Solche Wälzschälwerkzeuge und Wälzschälverfahren sind grundsätzlich bekannt, beispielsweise aus EP 3 528 989 B1 oder aus EP 2 537 616 A1.

Zum Herstellen von Verzahnungen sind verschiedene Verfahren bekannt. Als spanende Verfahren seien beispielsweise Wälzfräsen, Hobeln, Stoßen oder Wälzschleifen genannt. Das sogenannte Wälzschälen ist ein kontinuierliches spanabhebendes Verfahren zur Bearbeitung von Verzahnungen. Wichtige Grundlagen und Begriffe des Wälzschälens sind beispielsweise in EP 3 528 989 B1 erläutert. Das Wälzschälen ermöglicht die präzise Herstellung von Außenverzahnungen wie auch Innenverzahnungen.

Beim Wälzschälen wird ein Wälzschälwerkzeug um eine Werkzeugachse gedreht und ein Werkstück wird um eine windschief zu der Werkzeugachse verlaufende Werkstückachse gedreht. Gleichzeitig erfolgt eine Vorschubbewegung, die typischerweise entlang der Werkstückachse erfolgt. Das Wälzschälwerkzeug weist mehrere Schneidkanten auf. Schneidzähne erstrecken sich bei geradverzahnten Wälzschälwerkzeugen in axialer Richtung oder bei schrägverzahnten Wälzschälwerkzeugen unter einem Schrägungswinkel zur Werkstückachse. Spanflächen sind typischerweise stirnseitig an den Schneidzähnen des Wälzschälwerkzeugs eingerichtet; Freiflächen erstrecken sich bei geradverzahnten Wälzschälwerkzeugen näherungsweise in axialer Richtung oder bei schrägverzahnten Wälzschälwerkzeugen näherungsweise im Schrägungswinkel zur Werkstückachse an den Schneidzähnen.

Es ist beim Wälzschälen möglich, beide Zahnflanken an einer Zahnlücke der Verzahnung in demselben Durchlauf zu bearbeiten (sogenanntes beidflankiges Wälzschälen). Hierzu greifen die beiden Schneidkanten eines Schneidzahnes jeweils an den einander zugewandten Zahnflanken der jeweiligen Zahnlücke an.

Bei der gekoppelten Drehbewegung von Wälzschälwerkzeug und Werkstück gelangen die Schneidkanten bei bekannten Wälzschälwerkzeugen jeweils einzeln nacheinander in Eingriff und außer Eingriff mit der Verzahnung des Werkstücks. Beim Eintritt und Austritt der Schneidkanten ändern sich die zwischen Werkstück und Wälzschälwerkzeug wirkenden Kräfte sprunghaft. Die Kraftänderungen führen aufgrund der endlichen Steifigkeiten von Werkstück, Wälzschälwerkzeug sowie Wälzschälmaschine zu Abdrängeffekten. Dies resultiert häufig in einer lokalen Aufdickung (durch unzureichend tiefen Materialabtrag) an den Zahnflanken.

### Aufgabe der Erfindung

Es ist eine Aufgabe der Erfindung, die Maßhaltigkeit von durch Wälzschälen hergestellten Verzahnungen zu verbessern.

### Beschreibung der Erfindung

Diese Aufgabe wird erfindungsgemäß gelöst durch ein Wälzschälwerkzeug gemäß Anspruch 1 und ein Wälzschälverfahren gemäß Anspruch 7. Ferner wird diese Aufgabe gelöst durch ein Verfahren zum Herstellen eines Wälzschälwerkzeugs gemäß Anspruch 14. In den jeweiligen Unteransprüchen und der Beschreibung sind vorteilhafte Ausführungsformen bzw. Varianten angegeben.

### Erfindungsgemäßes Wälzschälwerkzeug

Erfindungsgemäß ist ein Wälzschälwerkzeug zum Bearbeiten von Zahnflanken einer Verzahnung eines Werkstücks vorgesehen. Für das Bearbeiten der Zahnflanken wird das Wälzschälwerkzeug um eine Werkzeugachse gedreht und das Werkstück wird um eine windschief zu der Werkzeugachse verlaufende Werkstückachse gedreht, wobei das Wälzschälwerkzeug und das Werkstück mit einer Vorschubbewegung mit einer Komponente entlang der Werkstückachse relativ zueinander verschoben werden. Die Vorschubbewegung weist aufgrund der Achskinematik auch eine Komponente entlang der Werkzeugachse auf. Typischerweise erfolgt die Vorschubbewegung parallel zu der Werkstückachse.

Das Wälzschälwerkzeug weist mehrere Schneidzähne mit je einer linken und einer rechten Schneidkante auf, welche Schneidkanten beim Bearbeiten des Werkstücks Material von den einander zugewandten Zahnflanken einer Zahnlücke der Verzahnung abtragen. Das Wälzschälwerkzeug ist somit dazu ausgebildet, in einem Durchlauf die beiden eine Zahnlücke begrenzenden Zahnflanken zu bearbeiten. Die Schneidzähne bzw. deren Schneidkanten sind mit anderen Worten zum beidflankigen Wälzschälen ausgebildet. Das Wälzschälwerkzeug kann geradverzahnt oder schrägverzahnt sein.

Die Bezeichnung der Schneidkanten als linke bzw. rechte Schneidkante dient der Unterscheidung der beiden Schneidkanten eines Schneidzahns; es könnte auch von ersten und zweiten Schneidkanten gesprochen werden. Welche Schneidkanten jeweils als linke oder rechte Schneidkante bezeichnet werden, ist nicht von weiterer Bedeutung. Es versteht sich, dass die linken bzw. rechten Schneidkanten bei allen Schneidzähnen jeweils gleichartig am Schneidzahn verortet sind. Entsprechendes gilt für die Bezeichnung der Zahnflanken der zu bearbeitenden Verzahnung als rechte bzw. linke Zahnflanken.

Erfindungsgemäß ist vorgesehen, dass die linken und rechten Schneidkanten eines jeweiligen der Schneidzähne auf unterschiedlichen Kugelflächen oder in unterschiedlichen Ebenen verlaufen. Dies ermöglicht eine Anpassung der Schneidkanten, sodass jeweils ein Schneidkantenpaar bestehend aus einer linken und einer rechten Schneidkante zugleich an der Verzahnung des Werkstücks in Eingriff oder außer Eingriff gelangt. Bei der Verwendung des Wälzschälwerkzeugs kommen mit anderen Worten die linke und rechte Schneidkante eines jeweiligen Schneidkantenpaares vorteilhafterweise zugleich mit zueinander gegennamigen Zahnflanken, d. h. einer linken und einer rechten Zahnflanke, der Verzahnung in Kontakt und/oder außer Kontakt. Die zueinander gegennamigen (ungleichnamigen) Zahnflanken der Verzahnung weisen in Umfangsrichtung in entgegengesetzte Richtungen. Je nach Benennung der Zahnflanken, können die linken Schneidkanten je eine linke Zahnflanke und die rechten Schneidkanten je eine rechte Zahnflanke bearbeiten und zugleich in bzw. außer Kontakt mit diesen kommen. Alternativ können die linken Schneidkanten je eine rechte Zahnflanke und die rechten Schneidkanten je eine linke Zahnflanke bearbeiten und zugleich in bzw. außer Kontakt mit diesen kommen.

Die beiden Schneidkanten eines jeweiligen Schneidkantenpaares können an demselben Schneidzahn ausgebildet sein. Es ist aber auch denkbar, dass die beiden Schneidkanten eines jeweiligen Schneidkantenpaares an unterschiedlichen Schneidzähnen, insbesondere an nächsten oder übernächsten Nachbarn ausgebildet sind.

Die Geometrie der Schneidkanten entspricht jeweils einem Schnitt des zur herzustellenden Verzahnung konjugierten Körpers mit einer erzeugenden Geometrie der jeweiligen Schneidkante, wobei für die linken und rechten Schneidkanten erfindungsgemäß unterschiedliche erzeugende Geometrien mit dem konjugierten Körper geschnitten werden. Die erzeugende Geometrie kann einer Kugelfläche sein. Im Sonderfall eines unendlichen Kugelradius ist die Kugelfläche eine Ebene ist. Für die linken und rechten Schneidkanten werden insbesondere unterschiedliche Kugelflächen bzw. Ebenen mit dem konjugierten Körper geschnitten.

Der konjugierte Körper ist derjenige (gedachte) Körper der in der Achskonfiguration der Wälzschälbearbeitung, für welche das Wälzschälwerkzeug bestimmt ist, bei Drehung um die Werkzeugachse und bei Drehung des Werkstücks um die Werkstückachse an jedem Punkt mit der (herzustellenden) Verzahnung wälzen würde.

Bei aus dem Stand der Technik bekannten Wälzschälwerkzeugen wird für die Definition der beiden Schneidkanten eines Schneidzahns dieselbe erzeugende Geometrie (häufig eine Ebene oder im Falle eines Werkzeugs mit Kalottenschliff eine Kugel) mit dem konjugierten Körper geschnitten. Die Spanfläche ist dann Teil der erzeugenden Geometrie. Die Erfinder haben erkannt, dass aufgrund der kinematischen Verhältnisse beim Wälzschälen diese Gestaltung des Werkzeugs dazu führt, dass eine Schneidkante jeweils einzeln in Eingriff oder außer Eingriff gelangt, woraus die eingangs erläuterten Kraftschwankungen und Formabweichungen bei der bearbeiteten Verzahnung resultieren.

Erfindungsgemäß werden für die Gestaltung des Wälzschälwerkzeugs zwei erzeugende Geometrien pro Schneidzahn - je eine für die rechte und linke Schneidkante - verwendet. Die beiden Schneidkanten liegen somit nicht in derselben Ebene oder auf derselben Kugelfläche, sondern jeweils in einer anderen Ebene bzw. auf einer anderen Kugelfläche. Eine Spanfläche des erfindungsgemäßen Wälzschälwerkzeugs ist somit nicht Teil der Ebene oder der Kugelfläche einer der Schneidkanten, sondern vermittelt zwischen den Ebenen bzw. Kugelflächen der beiden Schneidkanten eines jeweiligen Schneidzahns ggf. unter Berücksichtigung der Höhe von Spanflächenfasen. Typischerweise werden für alle Schneidzähne des Wälzschälwerkzeugs dieselben beiden erzeugenden Geometrien verwendet und gleichartig relativ zum jeweiligen Schneidzahn positioniert (durch Drehung um eine Zahnteilung um die Werkzeugachse). In Sonderfällen ist es aber auch denkbar, dass mehrere Paare von erzeugenden Geometrien verwendet werden, um jeweils die Schneidkanten einer Gruppe von Schneidzähnen zu definieren.

Durch die erfindungsgemäße Gestaltung werden die eingangs erläuterten Abdrängeffekte beim Einlaufen oder Auslaufen der Schneidkanten an der zu bearbeitenden Verzahnung vermieden. Dies erhöht die Maßhaltigkeit der hergestellten Verzahnung. Da - im Vergleich zur Verwendung herkömmlicher Wälzschälwerkzeuge - geringere Kraftschwankungen zwischen Werkstück und Wälzschälwerkzeug auftreten, werden die Anforderungen an die Antriebe bzw. Spindeln zur Aufnahme von Werkstück und Wälzschälwerkzeug verringert.

Insbesondere können vergleichsweise weiche Antriebe bzw. Spindeln verwendet werden, ohne die Bearbeitungsqualität zu beeinträchtigen, was zu Kostenvorteilen führen kann. Umgekehrt kann bei Verwendung derselben Wälzschälmaschine mit dem erfindungsgemäßen Wälzschälwerkzeug die Bearbeitungsqualität gegenüber einem herkömmlichen Wälzschälwerkzeug gesteigert werden. Durch die Bearbeitung sowohl der linken wie auch der rechten Zahnflanken der herzustellenden Verzahnung in einem Bearbeitungsdurchlauf sind bei hoher Fertigungsqualität geringe Taktzeiten möglich.

Vorzugsweise wird das Wälzschälwerkzeug in einem unten beschriebenen, erfindungsgemäßen Bearbeitungsverfahren eingesetzt. In den Rahmen der vorliegenden Erfindung, fällt auch die Verwendung eines erfindungsgemäßen Wälzschälwerkzeugs, wobei die Schneidkanten von Schneidkantenpaaren, die je durch eine der linken und eine der rechten Schneidkanten gebildet sind, jeweils zugleich mit zueinander gegennamigen Zahnflanken der Verzahnung in Kontakt und/oder außer Kontakt kommen.

Das erfindungsgemäße Wälzschälwerkzeug kann durch ein unten beschriebenes, erfindungsgemäßes Herstellverfahren erhalten sein.

Ein Achskreuzwinkel zwischen der Werkzeugachse und der Werkstückachse kann wenigstens 5°, bevorzugt wenigstens 10°, und/oder höchstens 45°, bevorzugt höchstens 30°, betragen.

Vorzugsweise ist zwischen einer Spanfläche eines jeweiligen der Schneidzähne und dessen linker Schneidkante eine linke Spanflächenfase ausgebildet und zwischen der Spanfläche des jeweiligen Schneidzahns und dessen rechter Schneidkante eine rechte Spanflächenfase ausgebildet. Dadurch kann an den beiden Schneidkanten jeweils eine stumpfe Schneide erhalten werden, was die Standzeit des Wälzschälwerkezugs erhöhen kann. Zudem kann eine stumpfe Schneide die Bearbeitungsgüte verbessern. Stumpfe Schneiden eignen sich insbesondere für die Hartfeinbearbeitung gehärteter Werkstücke.

Die rechten und linken Spanflächenfasen können unterschiedlich breit sein und/oder unterschiedlich gegenüber der Spanfläche geneigt sein. Dadurch können an den rechten und linken Schneidkanten gleiche oder zumindest annähernd gleiche Spanwinkel (welche sich z. B. um maximal 20°, bevorzugt maximal 10°, unterscheiden) für die auf den Spanflächenfasen ablaufenden Späne erhalten werden.

Zwischen einer linken Freifläche eines jeweiligen der Schneidzähne und dessen linker Schneidkante kann eine linke Freiflächenfase ausgebildet sein und zwischen der rechten Freifläche des jeweiligen Schneidzahns und dessen rechter Schneidkante kann eine rechte Freiflächenfase ausgebildet sein.

Bevorzugt weichen Winkel zwischen den rechten und linken Spanflächenfasen und jeweiligen linken und rechten Freiflächen oder - sofern vorhanden - jeweiligen linken und rechten Freiflächenfasen der Schneidzähne um höchstens 30°, insbesondere höchstens 15°, voneinander ab. Derart können an den beiden Schneidkanten gleiche Schneidbedingungen erreicht werden, insbesondere auch wenn unterschiedliche Keilwinkel zwischen den linken bzw. rechten Freiflächen und der Spanfläche eingerichtet sind.

Eine Spanfläche eines jeweiligen der Schneidzähne kann sich in einer Spanflächenebene erstrecken, die unter einem von 90° abweichenden Winkel zu einer Schrägungsrichtung der Schneidzähne verläuft. Im Falle eines geradverzahnten Wälzschälwerkzeugs ist die "Schrägungsrichtung" der Schneidzähne parallel zur Werkzeugachse. Derart kann ein Treppenschliff erhalten werden, welcher die erfindungsgemäße Anordnung der beiden Schneidkanten eines Schneidzahns auf unterschiedlichen erzeugenden Geometrien vereinfacht.

Insbesondere kann der Winkel zwischen der Spanflächenebene und der Schrägungsrichtung um wenigstens 5°, bevorzugt wenigstens 10°, besonders bevorzugt wenigstens 20°, von 90° abweichen. Derart große Abweichungen von der Normalebene zur Schrägungsrichtung haben sich in Untersuchungen der Erfinder als vorteilhaft herausgestellt. Bei herkömmlichen Wälzschälwerkzeugen verläuft die Spanflächenebene demgegenüber grundsätzlich senkrecht zur Schrägungsrichtung der Schneidzähne.

### Erfindungsgemäßes Bearbeitungsverfahren

In den Rahmen der Erfindung fällt auch ein Verfahren zum Bearbeiten von Zahnflanken einer Verzahnung eines Werkstücks durch Wälzschälen, indem ein Wälzschälwerkzeug in Eingriff mit der Verzahnung gebracht wird, wobei das Wälzschälwerkzeug um eine Werkzeugachse gedreht wird und das Werkstück um eine windschief zu der Werkzeugachse verlaufende Werkstückachse gedreht wird, und wobei das Wälzschälwerkzeug und das Werkstück mit einer Vorschubbewegung mit einer Komponente entlang der Werkstückachse relativ zueinander verschoben werden. Das Wälzschälwerkzeug weist mehrere Schneidzähne mit je einer linken und einer rechten Schneidkante auf. Das Wälzschälwerkzeug ist vorzugsweise ein oben beschriebenes, erfindungsgemäßes Wälzschälwerkzeug. Die Vorschubbewegung weist aufgrund der Achskinematik auch eine Komponente entlang der Werkzeugachse auf. Typischerweise erfolgt die Vorschubbewegung parallel zu der Werkstückachse. Die Geschwindigkeit der Vorschubbewegung ist typischerweise konstant. Ein Achskreuzwinkel zwischen der Werkzeugachse und der Werkstückachse kann wenigstens 5°, bevorzugt wenigstens 10, und/oder höchstens 45°, bevorzugt höchstens 30°, betragen. Die Verzahnung kann eine Innenverzahnung oder eine Außenverzahnung sein.

Das erfindungsgemäße Bearbeitungsverfahren ist dadurch gekennzeichnet, dass die Schneidkanten von Schneidkantenpaaren, die je durch eine der rechten und eine der linken Schneidkanten gebildet sind, jeweils zugleich mit zueinander gegennamigen Zahnflanken der Verzahnung in Kontakt und/oder außer Kontakt kommen. Mit anderen Worten bilden die Schneidkanten des Wälzschälwerkzeugs Paare bestehend aus je einer linken und einer rechten Schneidkante. Für jedes der Schneidkantenpaare kommen dessen beide Schneidkanten zugleich in und/oder außer Kontakt mit der Verzahnung des Werkstücks. Vorzugsweise ist jede Schneidkante des Wälzschälwerkzeugs Teil eines solchen Schneidkantenpaares. Zur Definition geeigneter linker und rechter Schneidkanten eines jeweiligen Schneidkantenpaares können unterschiedliche erzeugende Geometrien, insbesondere unterschiedliche Kugelflächen oder Ebenen, mit dem zur herzustellenden Verzahnung konjugierten Körper geschnitten werden.

Bei der erfindungsgemäßen Durchführung des Wälzschälverfahrens werden die eingangs erläuterten Abdrängeffekte beim Einlaufen und/oder Auslaufen der Schneidkanten an der zu bearbeitenden Verzahnung vermieden. Dies erhöht die Maßhaltigkeit der hergestellten Verzahnung. Da - im Vergleich zur Verwendung herkömmlicher Wälzschälwerkzeuge - geringere Kraftschwankungen zwischen Werkstück und Wälzschälwerkzeug auftreten, werden die Anforderungen an die Antriebe bzw. Spindeln zur Aufnahme von Werkstück und Wälzschälwerkzeug verringert. Insbesondere können vergleichsweise weiche Antriebe bzw. Spindeln verwendet werden, ohne die Bearbeitungsqualität zu beeinträchtigen, was zu Kostenvorteilen führen kann. Umgekehrt kann bei Verwendung derselben Wälzschälmaschine zur Durchführung des erfindungsgemäßen Bearbeitungsverfahrens die Bearbeitungsqualität gegenüber einer herkömmlichen Wälzschälbearbeitung gesteigert werden. Durch die Bearbeitung sowohl der linken wie auch der rechten Zahnflanken der herzustellenden Verzahnung in einem Bearbeitungsdurchlauf sind bei hoher Fertigungsqualität geringe Taktzeiten möglich.

Die gleichzeitig in und/oder außer Kontakt kommenden Schneidkanten am Wälzschälwerkzeug können unmittelbar benachbart zueinander angeordnet sein. Die Schneidkanten eines Schneidkantenpaares sind dann jeweils durch zwei unmittelbar benachbarte Schneidkanten gebildet. Dies kann die Auslegung des Wälzschälwerkzeugs vereinfachen. Diese Variante eignet sich insbesondere für Wälzschälwerkzeuge mit wenigen Schneidzähnen und/oder Werkstückte mit wenigen Zähnen. Die beiden Schneidkanten, die jeweils gleichzeitig in und/oder außer Kontakt kommen, können hierbei an demselben Schneidzahn ausgebildet sein. Alternativ können die beiden Schneidkanten, die jeweils gleichzeitig in und/oder außer Kontakt kommen, an unmittelbar benachbarten Schneidzähnen ausgebildet sein und einander zuweisen; mit anderen Worten können die beiden Schneidkanten an derselben Zahnlücke des Wälzschälwerkzeugs angeordnet sein.

Alternativ können zwischen den zugleich in und/oder außer Eingriff kommenden Schneidkanten eines Schneidkantenpaares je wenigstens eine linke und wenigstens eine rechte Schneidkante angeordnet sein. Bei dieser Variante sind die Schneidkanten eines der Schneidkantenpaare keine unmittelbaren Nachbarn. Diese Variante eignet sich insbesondere für Wälzschälwerkzeuge mit vielen Schneidzähnen und/oder Werkstückte mit vielen Zähnen.

Der zugleich beginnende und/oder endende Eingriff der Schneidkanten eines jeweiligen der Schneidkantenpaare kann in Bezug auf verschiedene Parameter vorliegen. Vorzugsweise erfolgen der Eingriffsbeginn und/oder das Eingriffsende zugleich im Sinne mehrerer, insbesondere aller, der nachfolgend erläuterten Parameter.

Die rechten und linken Schneidkanten eines jeweiligen Schneidkantenpaares können bei derselben Axialposition von Werkstück und Wälzschälwerkzeug in Vorschubrichtung mit den zueinander gegennamigen Zahnflanken in Kontakt und/oder außer Kontakt kommen. Dieselbe Axialposition liegt insbesondere vor, wenn die Vorschubbewegung zwischen dem Kontaktbeginn bzw. Kontaktende an den beiden zueinander gegennamigen Zahnflanken weniger als 20 µm, bevorzugt weniger als 10 µm, besonders bevorzugt weniger als 5 µm, beträgt.

Die rechten und linken Schneidkanten eines jeweiligen Schneidkantenpaares können bei derselben Drehstellung des Wälzschälwerkzeugs bezüglich der Werkzeugachse mit den zueinander gegennamigen Zahnflanken in Kontakt und/oder außer Kontakt kommen. Dieselbe Drehstellung liegt insbesondere vor, wenn ein Drehwinkel der Drehbewegung des Wälzschälwerkzeugs um die Werkzeugachse zwischen dem Kontaktbeginn bzw. Kontaktende an den beiden zueinander gegennamigen Zahnflanken weniger als 0,5°, bevorzugt weniger als 0,2°, besonders bevorzugt weniger als 0,1°, ganz besonders bevorzugt weniger als 0,05°, beträgt.

Die rechten und linken Schneidkanten eines jeweiligen Schneidkantenpaares können zeitgleich mit den zueinander gegennamigen Zahnflanken in Kontakt und/oder außer Kontakt kommen. Ein zeitgleicher Kontaktbeginn bzw. ein zeitgleiches Kontaktende liegt insbesondere vor, wenn zwischen dem Kontaktbeginn bzw. dem Kontaktende an den beiden zueinander gegennamigen Zahnflanken weniger als 60 µs, bevorzugt weniger als 30 µs, besonders bevorzugt weniger als 15 µs, ganz besonders bevorzugt weniger als 7 µs, vergehen.

Die Wälzschälbearbeitung ist vorzugsweise eine Hartfeinbearbeitung, die nach einem Härten der Verzahnung durchgeführt wird. Bei der Hartfeinbearbeitung ist die erfindungsgemäß verbesserte Maßhaltigkeit der Verzahnung besonders wichtig, da in der Regel keine weitere formgebende Bearbeitung erfolgt.

Typischerweise wird vor dem Härten eine Weichbearbeitung der Verzahnung durchgeführt. Die Weichbearbeitung kann beispielsweise durch Wälzfräsen, Hobeln, Stoßen oder vorzugsweise Wälzschälen erfolgen. Auch die Weichbearbeitung kann mit einem erfindungsgemäßen Bearbeitungsverfahren und/oder einem erfindungsgemäßen Wälzschälwerkzeug durchgeführt werden. Insofern betrifft die Erfindung auch ein Herstellverfahren umfassend eine Weichbearbeitung, ein Härten und eine Hartfeinbearbeitung, wobei die Weichbearbeitung und/oder die Hartfeinbearbeitung mit dem erfindungsgemäßen Verfahren erfolgen.

Bei einer alternativen, vorteilhaften Verfahrensvariante ist die Wälzschälbearbeitung eine Weichbearbeitung, an welche sich keine weitere materialabtragende, insbesondere keine weitere spanabhebende, Bearbeitung der Zahnflanken anschließt. Die bei der Weichbearbeitung erzeugte Form der Zahnflanken bleibt somit am fertigen Werkstück erhalten. Bei einer Weichbearbeitung kann die Standzeit des Wälzschälwerkzeugs gegenüber einer Hartbearbeitung erhöht sein. Im Anschluss an die Weichbearbeitung kann eine chemische, physikalische und/oder thermische Oberflächenbearbeitung, insbesondere ein Härten, erfolgen. Beispielsweise können die Zahnflanken oder das ganze Werkstück nitriert werden. Insofern betrifft die Erfindung auch ein Herstellverfahren umfassend eine Weichbearbeitung, die mit dem erfindungsgemäßen Verfahren erfolgt, und eine anschließende nichtabtragende Oberflächenbearbeitung, insbesondere ein Härten, der Zahnflanken, wobei das Herstellverfahren keine materialabtragende Hartbearbeitung nach der nichtabtragenden Oberflächenbearbeitung umfasst. Bei dieser Variante wird grundsätzlich ein Härteverfahren, beispielsweise Nitrieren, angewandt, das nur einen geringen Verzug verursacht, sodass auf eine korrigierende Nachbearbeitung verzichtet werden kann.

Kopfabschnitte der Schneidzähne können die Zahnlücken der Verzahnung durchlaufen, ohne das Werkstück zu berühren. Diese Verfahrensgestaltung eignet sich insbesondere für eine Hartfeinbearbeitung. Indem die Kopfabschnitte der Schneidzähne kontaktfrei durch die Zahnlücken laufen, werden Abdrängeffekte in radialer Richtung verringert. Dies verbessert die Maßhaltigkeit der hergestellten Verzahnung weiter.

### Erfindungsgemäßes Herstellverfahren für ein Wälzschälwerkzeug

In den Rahmen der vorliegenden Erfindung fällt ferner ein Verfahren zur Herstellung eines Wälzschälwerkzeugs mit den Schritten
A) Vorgeben einer herzustellenden Verzahnung mit einer Werkstückachse;
B) Vorgeben einer Lage einer Werkzeugachse relativ zu der Werkstückachse;
C) Berechnen eines zur herzustellenden Verzahnung konjugierten Körpers mit mehreren Zähnen für die vorgegebene relative Lage von Werkzeugachse und Werkstückachse, sodass der konjugierte Körper bei Drehung um die Werkzeugachse und Drehung der Verzahnung um die Werkstückachse in jedem Punkt mit der Verzahnung wälzt;
D) für jeden Zahn Schneiden des konjugierten Körpers mit zwei unterschiedlichen erzeugenden Geometrien, sodass Schnittlinien des konjugierten Körpers mit den erzeugenden Geometrien je eine rechte und eine linke Schneidkante definieren, welche paarweise zugleich mit der herzustellenden Verzahnung in Kontakt und/oder außer Kontakt kommen, wenn die Verzahnung um die Werkstückachse und der konjugierte Körper um die Werkzeugachse gedreht werden;
E) Herstellen des Wälzschälwerkzeugs mit den in Schritt D) bestimmten Schneidkanten.

Mit diesem Herstellverfahren kann ein erfindungsgemäßes Wälzschälwerkzeug erhalten werden, welches die Durchführung des erfindungsgemäßen Bearbeitungsverfahrens ermöglicht.

Die Zähne des konjugierten Körpers sind entlang der Werkzeugachse in der Regel zunächst nicht begrenzt. Die Schneidkanten (und eine zwischen den jeweiligen rechten und linken Schneidkanten angeordnete Spanfläche) bilden axiale Begrenzung, sodass für jeden Zahn des konjugierten Körpers ein Schneidzahn des Wälzschälwerkzeugs erhalten wird.

Im Schritt D) werden durch die unterschiedlichen erzeugenden Geometrien die Schneidkanten der Schneidzähne definiert, indem die erzeugenden Geometrien mit dem konjugierten Körper geschnitten werden. Die erzeugenden Geometrien können Kugelflächen oder Ebenen sein. Dies vereinfacht die Durchführung des Verfahrens.

Grundsätzlich werden die beiden Schneidkanten eines Schneidzahns durch unterschiedliche erzeugende Geometrien erhalten, welche nicht nur um einen Teilungswinkel zwischen den betrachteten Zähnen um die Werkzeugachse gedreht sind, sondern eine zusätzliche Variation aufweisen, beispielsweise entlang der Werkzeugachse verschieden positioniert sind und/oder bezüglich der Werkzeugachse verschieden geneigt sind und/oder von verschiedener geometrischer Art (z. B. einmal eine Ebene und einmal eine Kugelfläche) sind.

Ein zugleich in und/oder außer Eingriff kommendes Schneidkantenpaar kann jeweils durch die Schneidkanten eines einzigen Schneidzahns oder zweier verschiedener Schneidzähne gebildet sein.

Dass der Eingriff der beiden Schneidkanten eines Schneidkantenpaares an der Verzahnung zugleich endet und/oder beginnt, kann durch numerische Verfahren, beispielsweise CAD-gestützt, sichergestellt werden, indem beispielsweise die Lage und/oder Ausrichtung der erzeugenden Geometrien variiert wird.

Eine Ebene als erzeugende Geometrie kann beispielsweise entlang der Werkzeugachse verschoben werden, um die linken bzw. rechten Schneidkanten eines Schneidkantenpaares zu definieren. Im Falle von Ebenen als erzeugender Geometrie kann alternativ oder zusätzlich deren Neigung relativ zur Werkzeugachse um eine oder zwei Achsen variiert werden. Durch eine numerische Simulation der Wälzschälbearbeitung können axiale Positionen und/oder Neigungen der Ebenen identifiziert werden, bei welchen der Kontaktbeginn und/oder das Kontaktende zugleich erfolgen.

Im Falle von Kugelflächen als erzeugenden Geometrien kann für die rechten und linken Schneidkanten eines Schneidkantenpaares der Mittelpunkt der Kugel verschoben werden, vorzugsweise entlang der Werkzeugachse, alternativ oder zusätzlich auch in einer oder zwei hierzu senkrechten Richtungen. Alternativ oder zusätzlich kann der Radius der Kugelfläche verändert werden. Der Mittelpunkt der Kugelfläche wird somit nicht nur um einen entsprechenden Teilungswinkel um die Werkzeugachse gedreht, sondern es erfolgt ein zusätzlicher Versatz und/oder es wird der Radius der Kugelfläche verändert. Auch bei der Verwendung von Kugelflächen kann durch numerische Simulation der Wälzschälbearbeitung identifiziert werden, bei welchen verschiedenen Kugelflächen der Kontaktbeginn und/oder das Kontaktende zugleich erfolgen.

Für die Definition der beiden Schneidkanten eines jeden der Schneidzähne können die beiden unterschiedlichen erzeugenden Geometrien jeweils um den Teilungswinkel der Schneidzähne des Wälzschälwerkzeugs um die Werkzeugachse gedreht werden. Die Schneidzähne erhalten somit jeweils die gleiche Form. Alternativ ist es denkbar, mehrere Gruppen von je zwei unterschiedlichen erzeugenden Geometrien zu verwenden, um am Wälzschälwerkzeug Gruppen von Schneidkantenpaaren zu erhalten, wobei die Schneidkanten unterschiedlicher Gruppen jeweils verschieden konturiert sind. Dies kann die Oberflächengüte der mit dem Wälzschälwerkzeug hergestellten Verzahnung weiter verbessern.

Nach der Herstellung des Wälzschälwerkzeugs, vergleiche Schritt E), kann dieses in einem oben beschriebenen, erfindungsgemäßen Bearbeitungsverfahren verwendet werden.

Weitere Merkmale und Vorteile der Erfindung ergeben sich aus den Ansprüchen, der Beschreibung und der Zeichnung. Erfindungsgemäß können die vorstehend genannten und die noch weiter ausgeführten Merkmale jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine Wälzschälbearbeitung einer Verzahnung mit den relevanten Bewegungsachsen, in einer schematischen Darstellung;
- Fig. 2: zeigt die Verzahnung von Figur 1 und einen zu der Verzahnung konjugierten Körper, in einer schematischen Darstellung;
- Fig. 3: zeigt ein Wälzschälwerkzeug nach dem Stand der Technik, in einer schematischen Perspektivansicht;
- Fig. 4: zeigt einen Schneidzahn eines Wälzschälwerkzeugs in einer vergrößerten schematischen Perspektivansicht;
- Fig. 5: zeigt eine erste Ausführungsform eines erfindungsgemäßen Wälzschälwerkzeugs, in einer schematischen Perspektivansicht;
- Fig. 6: zeigt einen Schneidzahn des Wälzschälwerkzeugs von Figur 5, in einer vergrößerten schematischen Perspektivansicht;
- Fig. 7.1 bis 7.5: zeigen die Entwicklung der Kontaktverhältnisse zwischen einander zuweisenden Zahnflanken zweier benachbarter Zähne einer Verzahnung eines Werkstücks und den beiden voneinander wegweisenden Schneidkanten eines Schneidzahns eines erfindungsgemäßen Wälzschälwerkzeugs bei der erfindungsgemäßen Wälzschälbearbeitung, in verschiedenen schematischen Stirnschnitten bezüglich des Werkstücks;
- Fig. 8: zeigt eine zweite Ausführungsform eines erfindungsgemäßen Wälzschälwerkzeugs, in einer schematischen Perspektivansicht;
- Fig. 9: zeigt einen schematischen Längsschnitt durch einen Schneidzahn des Wälzschälwerkzeugs von Figur 8;
- Fig. 10: zeigt den Verlauf der beiden Schneidkanten eines Schneidzahns des Wälzschälwerkzeugs von Figur 8 im Bezug zu einer Normalenebene der Werkzeugachse, in einer schematischen Perspektivansicht;
- Fig. 11: zeigt ein schematisches Ablaufdiagramm eines erfindungsgemäßen Verfahrens zum Herstellen eines erfindungsgemäßen Wälzschälwerkzeugs;
- Fig. 12: zeigt eine Flankenlinie eines Zahns einer Verzahnung, die mit einem Wälzschälwerkzeug nach dem Stand der Technik bearbeitet wurde;
- Fig. 13: zeigt eine Flankenlinie eines Zahns einer Verzahnung, die mit einem erfindungsgemäßen Wälzschälwerkzeug bearbeitet wurde.

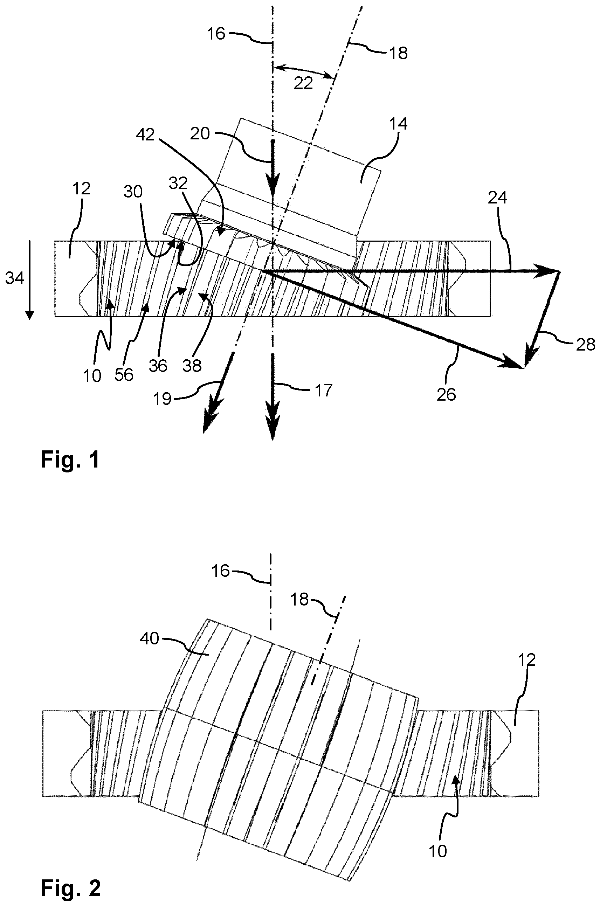

**Figur 1** zeigt eine Darstellung der Kinematik einer Wälzschälbearbeitung einer Verzahnung **10** eines Werkstücks **12** mit einem Wälzschälwerkzeug **14.** Das Werkstück 12 ist hier beispielhaft innenverzahnt. Die Wälzschälbearbeitung eines außenverzahnten Werkstücks erfolgt grundsätzlich mit denselben Bewegungen. Die in Figur 1 dargestellte Kinematik gilt gleichermaßen für eine aus dem Stand der Technik bekannte Wälzschälbearbeitung wie auch für erfindungsgemäße Wälzschälbearbeitungen mit erfindungsgemäßen Wälzschälwerkzeugen.

Zum Wälzschälen wird das verzahnte Wälzschälwerkzeug 14 in Eingriff mit der zu bearbeitenden Verzahnung 10 gebracht. Das Werkstück 12 mit der Verzahnung 10 wird um eine Werkstückachse **16** gedreht, wie durch einen Doppelpfeil **17** angedeutet ist. Zugleich wird das Wälzschälwerkzeug 14 um eine Werkzeugachse **18** gedreht, wie durch einen Doppelpfeil **19** angedeutet ist. Die jeweiligen Drehgeschwindigkeiten sind aufeinander abgestimmt. Während der gekoppelten Drehbewegung wird eine Vorschubbewegung **20** ausgeführt, die typischerweise entlang der Werkstückachse 16 verläuft.

Die Werkstückachse 16 und die Werkzeugachse 18 verlaufen windschief zueinander. Bei Projektion auf eine zum Gemeinlot der Achsen 16, 18 senkrechte Ebene ist ein Achskreuzwinkel **22** eingerichtet, der beispielsweise zwischen 10° und 30° liegen kann. Typischerweise verlaufen die Achsen 16, 18 parallel zu der zum Gemeinlot senkrechten Ebene; optional können aber auch die Achsen 16, 18 zueinander hin bzw. voneinander weg geneigt sein, sodass ein Neigungswinkel eingerichtet ist (nicht näher dargestellt).

Die aus den Drehungen des Werkstücks 12 und des Wälzschälwerkzeugs 14 resultierenden Umfangsgeschwindigkeiten in der Kontaktzone sind mit einem Pfeil **24** für das Werkstück 12 und einem Pfeil **26** für das Wälzschälwerkzeug 14 dargestellt. Aus der vektoriellen Differenz dieser Umfangsgeschwindigkeiten 24, 26 resultiert eine Schnittgeschwindigkeit **28.** Die Vorschubgeschwindigkeit der Vorschubbewegung 20 ist für die Schnittgeschwindigkeit in der Regel vernachlässigbar. Die Vorschubbewegung 20 bewirkt, dass die Bearbeitung bei aufeinanderfolgenden Eingriffen von linken und rechten Schneidkanten **30, 32** in Breitenrichtung **34** der Verzahnung entlang der Zahnflanken **36, 38** fortschreitet. Beim Durchlaufen einer Zahnlücke der Verzahnung 10 tragen die beiden Schneidkanten 30, 32 eines jeweiligen Schneidzahns **42** Material von den einander zugewandten Zahnflanken 36, 38 ab, welche die Zahnlücke begrenzen.

Bei der Wälzschälbearbeitung kann die Verzahnung 10 aus einem unverzahnten Werkstück herausgearbeitet werden. Ebenso ist es möglich, ein vorverzahntes Werkstück 12 durch Wälzschälen nachzubearbeiten. Die Wälzschälbearbeitung kann dabei insbesondere erfolgen, nachdem das vorverzahnte Werkstück 12 gehärtet wurde.

Zur Festlegung der Form der Schneidkanten 40 des Wälzschälwerkzeugs 14 kann auf den sogenannten konjugierten Körper **40** der herzustellenden Verzahnung 10 Bezug genommen werden, vergleiche **Figur 2****.** Der konjugierte Körper 34 ist ein gedachter Körper, der dadurch definiert ist, dass er in der Achskonfiguration der durchzuführenden Wälzschälbearbeitung, bei Drehung um die Werkzeugachse 18 und bei Drehung des Werkstücks 12 um die Werkstückachse 16 an jedem Punkt mit der (herzustellenden) Verzahnung 10 wälzen würde. Nach Vorgabe der herzustellenden Verzahnung und der Achskonfiguration für die Wälzschälbearbeitung kann der konjugierte Körper berechnet werden, beispielsweise mit numerischen Verfahren. Die Schneidkanten 40 können als Schnittlinien des konjugierten Körpers 34 mit erzeugenden Geometrien, beispielsweise Ebenen oder Kugeln, definiert werden.

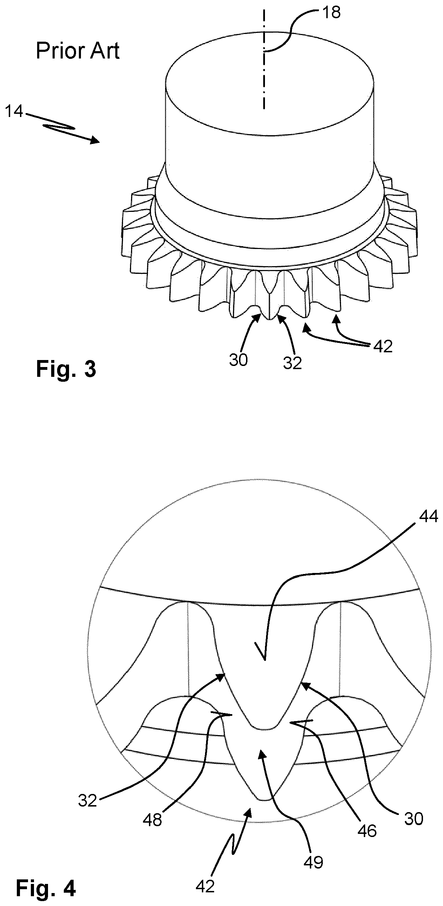

Bei Wälzschälwerkzeugen 14 aus dem Stand der Technik sind die rechten und linken Schneidkanten 30, 32 eines Schneidzahns 42 durch dieselbe erzeugende Geometrie definiert. Im Falle eines geradverzahnten Wälzschälwerkzeuges 14 kann im einfachsten eine einzige zur Werkzeugachse 18 senkrechte Ebene als erzeugende Geometrie für die Schneidkanten 30, 32 aller Schneidzähne 42 verwendet werden. Ein solches Wälzschälwerkzeug 14 ist in **Figur 3** dargestellt.

In **Figur 4** ist ein Schneidzahn 42 eines Wälzschälwerkzeugs vergrößert dargestellt. Die nachfolgenden Erläuterungen der Struktur des Schneidzahns 36 gelten für erfindungsgemäße wie auch für aus dem Stand der Technik bekannte Wälzschälwerkzeuge gleichermaßen.

Stirnseitig an dem Schneidzahn 42 ist eine Spanfläche **44** ausgebildet. Eine linke Schneidkante 30 grenzt die Spanfläche 44 von einer linken Freifläche **46** ab. Bei der Wälzschälbearbeitung trägt die Schneidkante 30 Material von linken Zahnflanken 36 der Verzahnung 10 ab. Eine rechte Schneidkante 32 dient der Bearbeitung der an einer Zahnlücke der Verzahnung 10 jeweils gegenüberliegenden, rechten Zahnflanken 38 (vergleiche Figur 1). Die rechte Schneidkante 32 grenzt die Spanfläche 44 von einer rechten Freifläche **48** ab. Zwischen den Schneidkanten 30, 32 und der Spanfläche 44 kann jeweils eine Spanflächenfase eingerichtet sein (in Figur 4 nicht näher dargestellt). Zwischen den Schneidkanten 30, 32 und den jeweiligen Freiflächen 46, 48 kann je eine Freiflächenfase eingerichtet sein (in Figur 4 nicht näher dargestellt).

Am Kopf **49** des Schneidzahns 36, ist bei der vorliegenden Erfindung typischerweise keine Kopfschneidkante ausgebildet. Vielmehr ist der Schneidzahn im Bereich des Kopfs 50 so bemessen, dass der Kopf 49 nicht mit dem Zahngrund der zu bearbeitenden Verzahnung in Kontakt kommt.

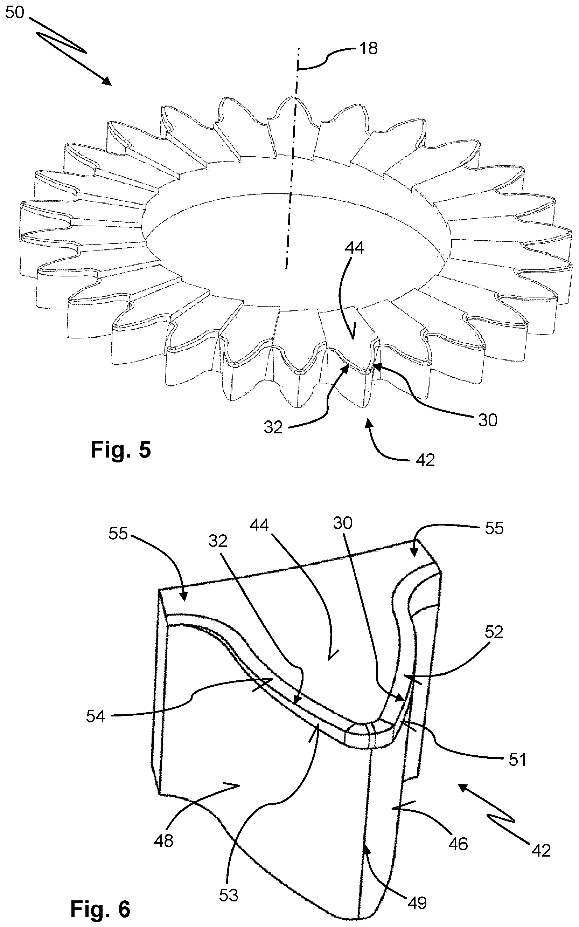

**Figur 5** zeigt ein erfindungsgemäßes Wälzschälwerkzeug **50** zum Bearbeiten der Verzahnung 10 des Werkstücks 12 (vergleiche insofern Figur 1). Das Wälzschälwerkzeug 50 ist geradverzahnt. Spanflächen 44 von Schneidzähnen 42 verlaufen unter einem von 90° abweichenden Winkel zur Werkzeugachse 18. Dadurch ist ein Treppenschliff eingerichtet.

**Figur 6** zeigt einen Schneidzahn 42 des Wälzschälwerkzeugs 50. Eine (bei Blick von der Werkzeugachse 18 aus über die Spanfläche 44) linke Schneidkante 30 verläuft in einer ersten Ebene, welche der zugehörigen erzeugenden Geometrie beim Schnitt mit dem konjugierten Körper 40 (vergleiche Figur 2) entspricht. Eine rechte Schneidkante 32 verläuft in einer zweiten Ebene, welche der zugehörigen erzeugenden Geometrie beim Schnitt mit dem konjugierten Körper 40 entspricht. Die Ebenen der beiden Schneidkanten 30, 32 sind um einen gewissen Winkel gegeneinander geneigt, beispielsweise zwischen 0,5° und 5°. Schnittpunkte der beiden Ebenen mit der Werkzeugachse 18 sind daher voneinander beabstandet.

Zwischen der linken Schneidkante 30 und der Spanfläche 44 ist eine linke Spanflächenfase **52** eingerichtet. Zwischen der rechten Schneidkante 32 und der Spanfläche 44 ist eine rechte Spanflächenfase **54** eingerichtet.

Weiterhin ist zwischen der linken Schneidkante 30 und der linken Freifläche 46 eine linke Freiflächenfase **51** eingerichtet. Zwischen der rechten Schneidkante 32 und der rechten Freifläche 48 ist eine rechte Freiflächenfase **53** eingerichtet. Die linke Freiflächenfase 51 ist vorliegend breiter als die rechte Freiflächenfase 53. Dabei nimmt die Breite der rechten Freiflächenfase 53 vom Fuß **55** des Schneidzahns 42 zu dessen Kopf 49 hin zu. Die Breite der linken Freiflächenfase 51 nimmt vom Kopf 55 des Schneidzahns 42 aus zum Fuß 55 hin weiter zu.

Der Verlauf der Schneidkanten 30, 32 an den Schneidzähnen 42 ist so gewählt, dass jeweils eine linke Schneidkante 30 und eine rechte Schneidkante 32 beim Bearbeiten des Werkstücks 12 zugleich in Eingriff mit dessen Verzahnung 10 kommen. Zudem ist der Verlauf der Schneidkanten 30, 32 an den Schneidzähnen so gewählt, dass jeweils eine linke Schneidkante 30 und eine rechte Schneidkante 32 beim Bearbeiten des Werkstücks 12 zugleich außer Eingriff mit dessen Verzahnung 10 kommen. Kontaktbeginn und Kontaktende erfolgen hier zugleich in dem Sinne, dass nur eine geringe Zeitspanne von beispielsweise höchstens 7 µs zwischen dem Kontaktbeginn bzw. Kontaktende an der einen und an der anderen Schneidkannte 30, 32 vergeht. Entsprechend kann ein vom Wälzschälwerkzeug 50 zwischen dem Kontaktbeginn bzw. Kontaktende an der einen und an der anderen Schneidkannte 30, 32 überstrichener Drehwinkel um die Werkzeugachse 18 vernachlässigbar klein sein und beispielsweise höchstens 0,07° betragen. Weiterhin kann ein vom Wälzschälwerkzeug 50 zwischen dem Kontaktbeginn bzw. Kontaktende an der einen und an der anderen Schneidkannte 30, 32 relativ zum Werkstück 12 zurückgelegter Vorschubweg vernachlässigbar klein sein und beispielsweise höchstens 7,5 µm betragen.

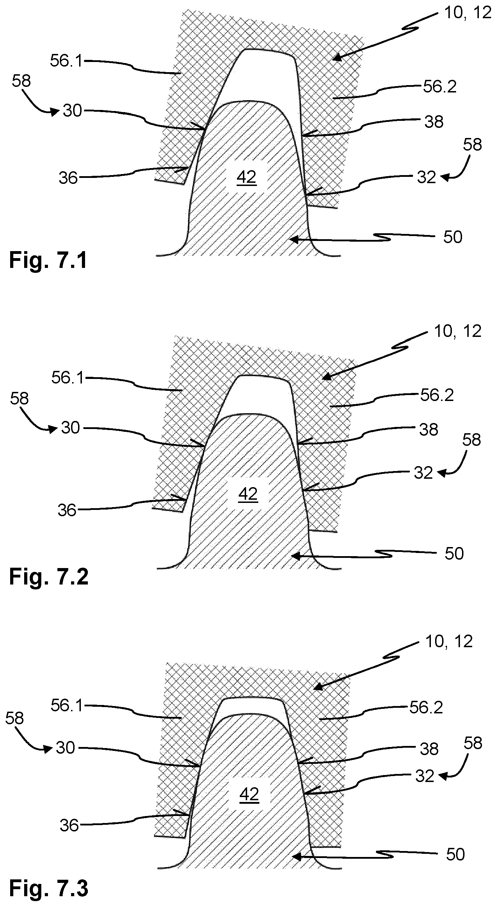

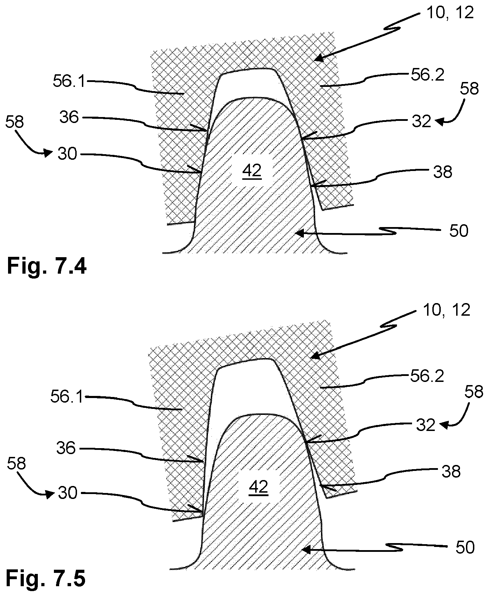

**Figur 7****.****1** veranschaulicht beispielhaft, wie die linke und rechte Schneidkante 30, 32 eines Schneidzahns 42 eines Wälzschälwerkzeugs 50 zugleich an unmittelbar benachbarten Zähnen **56.1, 56.2** der zu bearbeitenden Verzahnung 10 mit deren einander zuweisenden Zahnflanken 36, 38, hier der linken Zahnflanke 36 des Zahns 56.1 und der rechten Zahnflanke 38 des Zahns 56.2, in Eingriff kommen. Es sei angemerkt, dass die Schneidkanten 30, 32 im Allgemeinen nur lokal im Bereich des Kontakts mit den Zahnflanken 36, 38 in der Schnittebene des Stirnschnitts bezüglich des Werkstücks 12 verlaufen.

Im Verlauf der Bearbeitung schreitet der Kontakt zwischen dem Wälzschälwerkzeug 50 und der Verzahnung 10 entlang der Schneidkanten 30, 32 sowie der Zahnflanken 36, 38 fort, vergleiche **Figuren 7****.****2****,** **7****.****3** und **7.4.**

Schließlich gelangen die beiden Schneidkanten 30, 32 des Schneidzahns 42 zugleich außer Eingriff mit der rechten und linken Zahnflanke 36, 38 der beiden Zähne 56.1 und 56.2, vergleiche **Figur 7****.****5****.**

In den Figuren 7.1 bis 7.5 erfolgt die Darstellung im Koordinatensystem des Wälzschälwerkzeugs 50; das Wälzschälwerkzeug 50 erscheint daher feststehend, obwohl sowohl das Wälzschälwerkzeug 50 wie auch das Werkstück 12 um die Werkzeugachse bzw. Werkstückachse rotieren.

Im Verlauf der Bearbeitung wiederholt sich dieser Ablauf für alle einander zuweisenden Zahnflanken 36, 38 an den jeweils unmittelbar benachbarten Zähnen. Bei der beschriebenen Variante bilden somit die linken und rechten Schneidkanten 30, 32 eines der Schneidzähne 42 jeweils ein Schneidkantenpaar **58,** welches zugleich in Kontakt und außer Kontakt mit zueinander gegennamigen Zahnflanken 36, 38 der zu bearbeitenden Verzahnung 10 kommt.

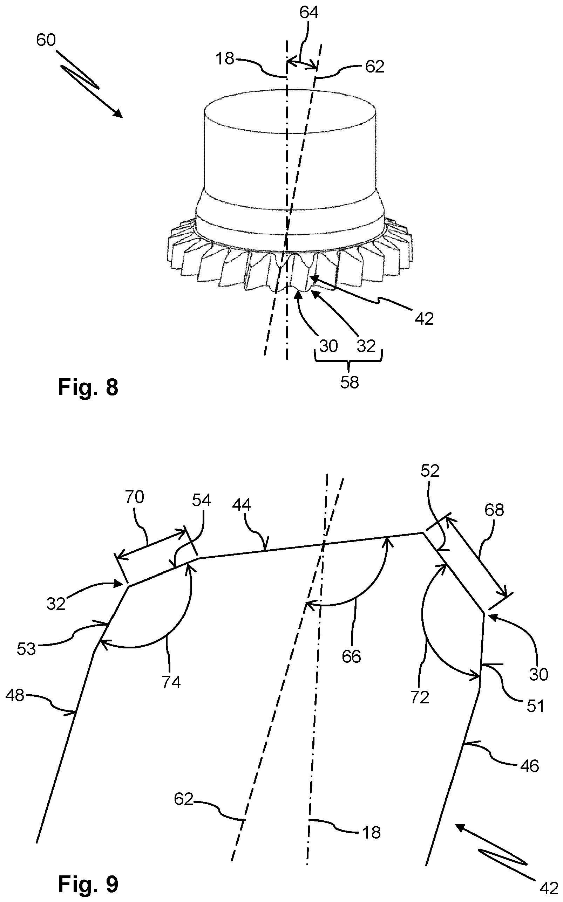

**Figur 8** zeigt ein erfindungsgemäßes schrägverzahntes Wälzschälwerkzeug **60** zur Bearbeitung der Verzahnung 10 des Werkstücks 12 (vergleiche insofern Figur 1). Schneidzähne 42 des Wälzschälwerkzeugs 60 erstrecken sich jeweils entlang einer Schrägungsrichtung **62,** welche in radialer Projektion auf die Werkzeugachse 18 mit der Werkzeugachse 18 einen Winkel **64** einschließt, der beispielsweise wenigstens 5° und höchstens 30° betragen kann.

Bei dem Wälzschälwerkzeug 60 bilden die beiden Schneidkanten 30, 32 eines jeden der Schneidzähne 42 ein Schneidkantenpaar 58, welches zugleich in Eingriff und außer Eingriff mit den einander an einer Zahnlücke der Verzahnung 10 zuweisenden Zahnflanken 36, 38 unmittelbar benachbarter Zähne 56 kommt.

**Figur 9** zeigt einen Längsschnitt durch einen der Schneidzähne 42 des Wälzschälwerkzeugs 60.

Linke und rechte Freiflächen 46, 48 erstrecken sich hier parallel zur Schrägungsrichtung 62, da durch die Achskinematik jeweils ein kinematischer Freiwinkel eingerichtet ist. Alternativ könnte sich der Schneidzahn 42 von den Schneidkanten 30, 32 weg verjüngen, um die wirksamen Freiwinkel zu vergrößern.

Zudem sind zwischen den Schneidkanten 30, 32 und den Freiflächen 46, 48 jeweils Freiflächenfasen 51, 53 vorgesehen.

Eine Spanfläche 44 des Schneidzahns 42 verläuft hier in einer Spanflächenebene, die nicht orthogonal zur Schrägungsrichtung 62 ist. Ein Winkel **66** zwischen der Spanfläche 44 und der Schrägungsrichtung 62 kann beispielsweise 110° betragen. Keilwinkel zwischen der Spanfläche 44 und den beiden Freiflächen 46, 48 unterscheiden sich daher voneinander. Auch die Werkstückachse 18 ist hier nicht orthogonal zur Spanfläche 44 ausgerichtet, sondern weicht um wenigstens 5° von der Spanflächennormalen ab.

Zwischen der Spanfläche 44 und den beiden Schneidkanten 30, 32 sind jeweils Spanflächenfasen 52, 54 eingerichtet. Vorliegend ist eine Breite **68** der linken Spanflächenfase 52 größer als eine Breite **70** der rechten Spanflächenfase 54.

Die beiden Spanflächenfasen 52, 54 sind so ausgerichtet, dass jeweils zwischen einer der Freiflächenfasen 51, 53 und der angrenzenden Spanflächenfase 52, 54 gemessene Winkel **72, 74** annähernd gleich groß sind. Vorzugsweise unterscheiden sich die Winkel 72, 74 um maximal 10° voneinander. Sofern keine Freiflächenfasen 51, 53 vorgesehen sein sollten, werden die Winkel 72, 74 zwischen den Spanflächenfasen 52, 54 und der jeweils angrenzenden Freifläche 46, 48 gemessen (nicht näher dargestellt).

Im Verlauf der Schneidkanten 30, 32 können sich die Breiten 68, 70 der Spanflächenfasen 52, 54 und deren jeweilige Neigung gegenüber der Spanfläche 44 ändern, wobei vorzugsweise gleiche Winkel zwischen den Spanflächenfasen 52, 54 und der jeweils angrenzenden Freiflächenfase 51, 53 (oder, sofern keine Freiflächenfasen ausgebildet sind, der jeweils angrenzenden Freifläche 46, 48) erhalten bleiben.

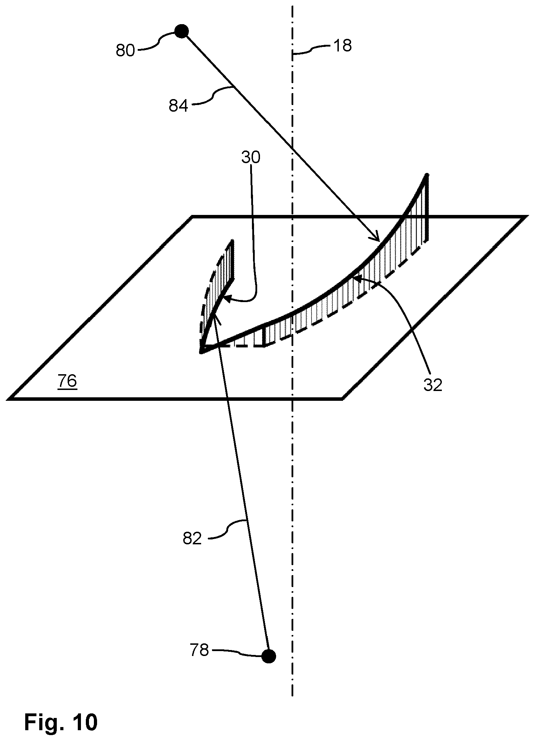

Bei dem Wälzschälwerkzeug 60 liegen die beiden Schneidkanten 30, 32 auf unterschiedlichen Kugelflächen, welche deren jeweilige erzeugende Geometrie darstellen. Dies ist in **Figur 10** illustriert. Zusätzlich zu den Schneidkanten 30, 32 ist deren jeweilige Projektion auf eine zur Werkzeugachse 18 orthogonalen Ebene **76** gestrichelt dargestellt, wobei zu erkennen ist, dass die beiden Schneidkanten 30, 32 auf unterschiedlichen Seiten der Ebene 76 verlaufen. Mittelpunkte **78, 80** der beiden Kugelflächen können auf unterschiedlichen Seiten der Ebene 76 liegen, insbesondere jeweils auf derjenigen Seite, auf welcher die zugehörige Schneidkante 30, 32 liegt. Ferner können die Mittelpunkte 78, 80 unterschiedliche Abstände zur Werkzeugachse 18 aufweisen.

Auch Radien **82, 84** der beiden Kugelflächen unterscheiden sich voneinander, beispielsweise um wenigstens 10 %.

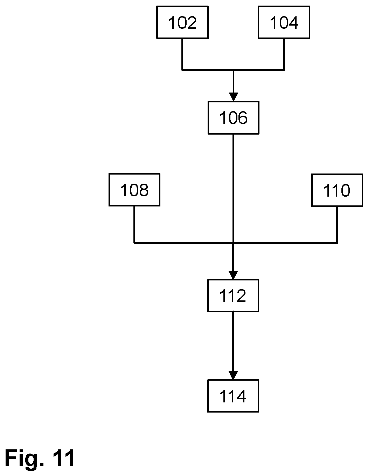

Der Ablauf, um ein erfindungsgemäßes Wälzschälwerkzeug 50, 60 zu erhalten, ist in **Figur 11** skizziert.

Zunächst wird die Geometrie einer herzustellenden Verzahnung 10 vorgegeben, vergleiche Schritt **102.** In einem Schritt **104** wird die Wälzschälkinematik, insbesondere die Lage einer Werkzeugachse 18 relativ zur Werkstückachse 16, vorgegeben. Dabei kann auch die Zahl der Schneidzähne 42 des anzufertigenden Wälzschälwerkzeugs 50, 60 vorgegeben werden. Aus diesen Informationen wird in einem Schritt **106** der zur herzustellenden Verzahnung konjugierte Körper 40 berechnet, sodass der konjugierte Körper bei Drehung um die Werkzeugachse und Drehung der Verzahnung um die Werkstückachse in jedem Punkt der gegenseitigen Berührung mit der Verzahnung wälzt. Hierzu wird typischerweise ein computergestütztes Verfahren eingesetzt.

In Schritten **108** und **110** kann für linke und rechte Schneidkanten 30, 32 des anzufertigenden Wälzschälwerkzeugs 50, 60 die Art einer erzeugenden Geometrie vorgegeben werden, beispielsweise ob diese in Ebenen oder auf Kugelflächen liegen sollen. Die erzeugenden Geometrien sind in geeigneter Weise parametriert. In einem Schritt **112** werden die beiden erzeugenden Geometrien rechnerisch mit dem konjugierten Körper 40 geschnitten, sodass die Schneidkanten 30, 32 der Schneidzähne 42 erhalten werden. Die erzeugenden Geometrien werden hierzu entsprechend der Zahl der Schneidzähne 42 um die Werkstückachse 18 rotiert. Die Parameter der erzeugenden Geometrien werden im Schritt 112 variiert, bis die von diesen Parametern abhängigen Schneidkanten 30, 32 beim Abwälzen auf der Verzahnung 10 paarweise zugleich in und/oder außer Kontakt mit den herzustellenden Zahnflanken 36, 38 kommen. Hierzu kann ein numerisches Optimierungsverfahren eingesetzt werden.

In einem Schritt **114** wird wenigstens ein Wälzschälwerkzeug 50, 60 mit dem aus Schritt 112 erhaltenen Verlauf der Schneidkanten 30, 32 hergestellt.

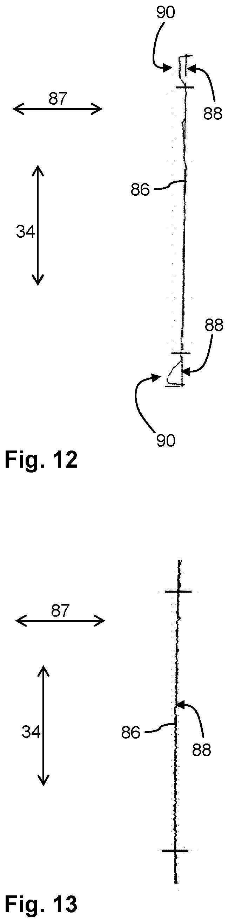

**Figur 12** zeigt für eine Verzahnung, die mit einem aus dem Stand der Technik bekannten Wälzschälwerkzeug 14 mit in einer gemeinsamen Ebene liegenden linken und rechten Schneidkanten 42 hergestellt wurde, den Verlauf einer sich in Breitenrichtung 34 erstreckenden Flankenlinien **86** eines Zahns, d. h. eine in Umfangsrichtung **87** gemessene Position der Zahnflanke im Vergleich zu einer diesbezüglichen Solllage **88** (in Umfangsrichtung ist ein größerer Maßstab gewählt als in Breitenrichtung). Es ist zu erkennen, dass die Flankenlinie 86 insbesondere an ihren axialen Enden deutlich von der Solllage 88 abweicht, indem lokale Aufdickungen **90** ausgebildet sind. Dies beeinträchtigt das Laufverhalten und die Haltbarkeit der Verzahnung. Die Aufdickungen 90 resultieren aus dem nur einseitigen Eingriff einer der Schneidkanten 30 bzw. 32, welche zu einer Auslenkung von Wälzschälwerkzeug und Werkstück gegeneinander führt.

In **Figur 13** ist demgegenüber eine Flankenlinie 86 einer Verzahnung dargestellt, die mit einem erfindungsgemäßen Wälzschälwerkzeug, beispielsweise einem der Wälzschälwerkzeuge 50, 60, in einem erfindungsgemäßen Bearbeitungsverfahren hergestellt wurde. Es ist zu erkennen, dass die Flankenlinie 86 im Wesentlichen in der Solllage 88 verläuft. Insbesondere an den axialen Enden aber auch im mittleren Bereich der Flankenlinie 86 sind weder Aufdickungen noch Eintiefungen zu erkennen. Durch den stets paarweisen Eingriff entgegengesetzter Schneidkanten, heben sich die ein Abdrängen von Wälzschälwerkzeug und Werkstück bewirkenden Komponenten der jeweiligen Kontaktkräfte näherungsweise auf, sodass eine präzisere Bearbeitung erfolgt. Es tritt lediglich eine geringfügige, unvermeidbare Welligkeit bzw. Rauigkeit in der Flankenlinie 86 auf. Im Hinblick auf Laufverhalten und Verschleiß der Verzahnung ist der Verlauf der Flankenlinie 86 als sehr gut einzustufen.

Zusammenfassend betrifft die Erfindung die Wälzschälbearbeitung von Verzahnungen. Bei der Bearbeitung der Zahnflanken der Verzahnung kommen Schneidkantenpaare von entgegengesetzt orientierten Schneidkanten eines Wälzschälwerkzeugs jeweils zugleich mit zwei entgegengesetzt orientierten Zahnflanken der Verzahnung in Kontakt und/oder außer Kontakt. Abdrängeffekte und daraus resultierende Bearbeitungsungenauigkeiten können dadurch verringert werden. Die beiden Schneidkanten eines solchen Schneidkantenpaares sind durch unterschiedliche erzeugende Geometrien definiert. Insbesondere verlaufen die beiden Schneidkanten eines Schneidkantenpaares am Wälzschälwerkzeug nicht in derselben Ebene und nicht auf derselben Kugelfläche.

### Bezugszeichenliste

Verzahnung **10**
Werkstück **12**
Wälzschälwerkzeug **14**
Werkstückachse **16**
Doppelpfeil **17**
Werkzeugachse **18**
Doppelpfeil **19**
Vorschubbewegung **20**
Achskreuzwinkel **22**
Umfangsgeschwindigkeit **24** (für das Werkstück 12)
Umfangsgeschwindigkeit **26** (für das Wälzschälwerkzeug 14)
Schnittgeschwindigkeit **28**
linke Schneidkante **30**
rechte Schneidkante **32**
Breitenrichtung **34**
linke Zahnflanke **36**
rechte Zahnflanke **38**
konjugierter Körper **40**
Schneidzahn **42**
Spanfläche **44**
linke Freifläche **46**
rechte Freifläche **48**
Kopf **49**
Wälzschälwerkzeug **50**
linke Freiflächenfase **51**
linke Spanflächenfase **52**
rechte Freiflächenfase **53**
rechte Spanflächenfase **54**
Fuß **55**
Zahn **56; 56.1, 56.2**
Schneidkantenpaar **58**
Wälzschälwerkzeug **60**
Schrägungsrichtung **62**
Winkel **64** zwischen Werkzeugachse 18 und Schrägungsrichtung 62
Winkel **66** zwischen Spanfläche 44 und Schrägungsrichtung 62
Breite **68** der linken Spanflächenfase 52
Breite **70** der rechten Spanflächenfase 54
Winkel **72** zwischen linker Freiflächenfase 51 und linker Spanflächenfase 52
Winkel **74** zwischen rechter Freiflächenfase 53 und rechter Spanflächenfase 54
Ebene **76** orthogonal zur Werkzeugachse 18
Mittelpunkt **78** der Kugelfläche der linken Schneidkante 30
Mittelpunkt **80** der Kugelfläche der rechten Schneidkante 32
Radius **82** der Kugelfläche der linken Schneidkante 30
Radius **84** der Kugelfläche der rechten Schneidkante 32
Flankenlinien **86**
Umfangsrichtung **87**
Solllage **88**
Aufdickung **90**
Eintiefung **92**
Vorgeben **102** einer herzustellenden Verzahnung 10
Vorgeben **104** einer Wälzschälkinematik
Berechnen **106** des zur Verzahnung 10 konjugierten Körpers 40
Vorgeben **108** von Eigenschaften einer ersten erzeugenden Geometrie
Vorgeben **110** von Eigenschaften einer zweiten erzeugenden Geometrie
Berechnen **112** von Schneidkanten 30, 32
Herstellen **114** eines Wälzschälwerkzeugs 50, 60

## Patentansprüche

1. Wälzschälwerkzeug (50; 60) zum Bearbeiten von Zahnflanken (36, 38) einer Verzahnung (10) eines Werkstücks (12), indem das Wälzschälwerkzeug (50; 60) um eine Werkzeugachse (18) gedreht wird und das Werkstück (12) um eine windschief zu der Werkzeugachse (18) verlaufende Werkstückachse (16) gedreht wird, wobei das Wälzschälwerkzeug (50; 60) und das Werkstück (12) mit einer Vorschubbewegung (20) mit einer Komponente entlang der Werkstückachse (16) relativ zueinander verschoben werden,
wobei das Wälzschälwerkzeug (50; 60) mehrere Schneidzähne (42) mit je einer linken und einer rechten Schneidkante (30, 32) aufweist, welche Schneidkanten (30, 32) beim Bearbeiten des Werkstücks (12) Material von den einander zugewandten Zahnflanken (36, 38) einer Zahnlücke der Verzahnung (10) abtragen,
**dadurch gekennzeichnet,**
**dass** die linken und rechten Schneidkanten (30, 32) eines jeweiligen der Schneidzähne (42) auf unterschiedlichen Kugelflächen oder in unterschiedlichen Ebenen verlaufen.

2. Wälzschälwerkzeug (50; 60) nach Anspruch 1, **dadurch gekennzeichnet, dass** zwischen einer Spanfläche (44) eines jeweiligen der Schneidzähne (42) und dessen linker Schneidkante (30) eine linke Spanflächenfase (52) ausgebildet ist und dass zwischen der Spanfläche (44) des jeweiligen Schneidzahns (42) und dessen rechter Schneidkante (32) eine rechte Spanflächenfase (54) ausgebildet ist.

3. Wälzschälwerkzeug (50; 60) nach Anspruch 2, **dadurch gekennzeichnet, dass** die rechten und linken Spanflächenfasen (52, 54) unterschiedlich breit sind und/oder unterschiedlich gegenüber der Spanfläche (44) geneigt sind.

4. Wälzschälwerkzeug (60) nach Anspruch 2 oder 3, **dadurch gekennzeichnet, dass** Winkel (72, 74) zwischen den rechten und linken Spanflächenfasen (52, 54) und jeweiligen linken und rechten Freiflächen (46, 48) oder jeweiligen linken und rechten Freiflächenfasen (51, 53) der Schneidzähne (42) um höchstens 30°, insbesondere höchstens 15°, voneinander abweichen.

5. Wälzschälwerkzeug (50; 60) nach einem der vorhergehenden Ansprüche, **dadurch gekennzeichnet, dass** eine Spanfläche (44) eines jeweiligen der Schneidzähne (42) sich in einer Spanflächenebene erstreckt, die unter einem von 90° abweichenden Winkel zu einer Schrägungsrichtung (62) der Schneidzähne (42) verläuft.

6. Wälzschälwerkzeug (50; 60) nach Anspruch 5, **dadurch gekennzeichnet, dass** der Winkel (66) zwischen der Spanflächenebene und der Schrägungsrichtung (62) um wenigstens 5°, bevorzugt wenigstens 10°, besonders bevorzugt wenigstens 20°, von 90° abweicht.

7. Verfahren zum Bearbeiten von Zahnflanken (36, 38) einer Verzahnung (10) eines Werkstücks (12) durch Wälzschälen, indem ein Wälzschälwerkzeug, insbesondere ein Wälzschälwerkzeug (50; 60) nach einem der vorhergehenden Ansprüche, in Eingriff mit der Verzahnung (10) gebracht wird,
wobei das Wälzschälwerkzeug (50; 60) um eine Werkzeugachse (18) gedreht wird und das Werkstück (12) um eine windschief zu der Werkzeugachse (18) verlaufende Werkstückachse (16) gedreht wird,
und wobei das Wälzschälwerkzeug (50; 60) und das Werkstück (12) mit einer Vorschubbewegung (20) mit einer Komponente entlang der Werkstückachse (16) relativ zueinander verschoben werden,
wobei das Wälzschälwerkzeug (50; 60) mehrere Schneidzähne (42) mit je einer linken und einer rechten Schneidkante (30, 32) aufweist,
**dadurch gekennzeichnet,**
**dass** die Schneidkanten (30, 32) von Schneidkantenpaaren (58), die je durch eine der rechten und eine der linken Schneidkanten (30, 32) gebildet sind, jeweils zugleich mit zueinander gegennamigen Zahnflanken (36, 38) der Verzahnung (10) in Kontakt und/oder außer Kontakt kommen.

8. Verfahren nach Anspruch 7, **dadurch gekennzeichnet, dass** die gleichzeitig in und/oder außer Kontakt kommenden Schneidkanten (30, 32) am Wälzschälwerkzeug (50; 60) unmittelbar benachbart zueinander angeordnet sind.

9. Verfahren nach Anspruch 7 oder 8, **dadurch gekennzeichnet, dass** die rechten und linken Schneidkanten (30, 32) eines jeweiligen Schneidkantenpaares (58) bei derselben Axialposition von Werkstück (12) und Wälzschälwerkzeug (50; 60) in Vorschubrichtung mit den zueinander gegennamigen Zahnflanken (36, 38) in Kontakt und/oder außer Kontakt kommen.

10. Verfahren nach einem der Ansprüche 7 bis 9, **dadurch gekennzeichnet, dass** die rechten und linken Schneidkanten (30, 32) eines jeweiligen Schneidkantenpaares (58) bei derselben Drehstellung des Wälzschälwerkzeugs (50; 60) bezüglich der Werkzeugachse (18) mit den zueinander gegennamigen Zahnflanken (36, 38) in Kontakt und/oder außer Kontakt kommen.

11. Verfahren nach einem der Ansprüche 7 bis 10, **dadurch gekennzeichnet, dass** die rechten und linken Schneidkanten (30, 32) eines jeweiligen Schneidkantenpaares (58) zeitgleich mit den zueinander gegennamigen Zahnflanken (36, 38) in Kontakt und/oder außer Kontakt kommen.

12. Verfahren nach einem der Ansprüche 7 bis 11, **dadurch gekennzeichnet, dass** die Wälzschälbearbeitung eine Hartfeinbearbeitung ist, die nach einem Härten der Verzahnung (10) durchgeführt wird.

13. Verfahren nach einem der Ansprüche 7 bis 12, **dadurch gekennzeichnet, dass** Kopfabschnitte der Schneidzähne (42) die Zahnlücken der Verzahnung (10) durchlaufen, ohne das Werkstück (12) zu berühren.

14. Verfahren zur Herstellung eines Wälzschälwerkzeugs (50; 60) mit den Schritten
A) Vorgeben einer herzustellenden Verzahnung (10) mit einer Werkstückachse (16);
B) Vorgeben einer Lage einer Werkzeugachse (18) relativ zu der Werkstückachse;
C) Berechnen eines zur herzustellenden Verzahnung (10) konjugierten Körpers mit mehreren Zähnen für die vorgegebene relative Lage von Werkzeugachse (18) und Werkstückachse, sodass der konjugierte Körper bei Drehung um die Werkzeugachse (18) und Drehung der Verzahnung (10) um die Werkstückachse (16) in jedem Punkt mit der Verzahnung (10) wälzt;
D) für jeden Zahn Schneiden des konjugierten Körpers (40) mit zwei unterschiedlichen erzeugenden Geometrien, sodass Schnittlinien des konjugierten Körpers mit den erzeugenden Geometrien je eine rechte und eine linke Schneidkante (30, 32) definieren, welche paarweise zugleich mit der herzustellenden Verzahnung (10) in Kontakt und/oder außer Kontakt kommen, wenn die Verzahnung (10) um die Werkstückachse (16) und der konjugierte Körper (40) um die Werkzeugachse (18) gedreht werden;
E) Herstellen des Wälzschälwerkzeugs mit den in Schritt D) bestimmten Schneidkanten.

15. Verfahren nach Anspruch 14, **dadurch gekennzeichnet, dass** die erzeugenden Geometrien Kugelflächen oder Ebenen sind.
